# FASCICULE DE BREVET EUROPEEN

(11) **EP 0 466 534 B1**
(45) Date de publication et mention de la délivrance du brevet: **29.09.1993**
(21) Numéro de dépôt: 91401617.5
(22) Date de dépôt: 17.06.1991
(51) Int. Cl.: B60T 7/10, G05G 1/06

(54) **Levier de frein à main notamment pour véhicule automobile**
Handbremshebel, insbesondere für Kraftfahrzeuge
Handbrake lever, especially for an automotive vehicle

(30) Priorité: 09.07.1990 FR 9008700
(43) Date de publication de la demande: 15.01.1992
(73) Titulaire: AUTOMOBILES PEUGEOT, 75116 Paris (FR); AUTOMOBILES CITROEN, 92200 Neuilly-sur-Seine (FR)
(72) Inventeur: Mire, Claude, 78360 Montesson (FR)
(74) Mandataire: Habasque, Etienne Joel Jean-François

(56) Documents cités:
- DE-A- 2 001 839
- DE-A- 3 529 696
- GB-A- 1 155 008
- US-A- 2 806 384

## Description

La présente invention concerne un levier de frein à main, notamment pour véhicule automobile.

Plus particulièrement, l'invention se rapporte à un levier de frein à main qui, lorsque les freins sont desserrés, se présente dans une position générale horizontale, près du sol à côté du siège de l'utilisateur.

Dans l'état de la technique, ces leviers de frein à main comportent un organe tubulaire relié à l'une de ses extrémités au mécanisme de manoeuvre des freins et muni à l'autre extrémité d'une poignée de manoeuvre et d'un organe de commande du déverrouillage des freins.

On trouvera un exemple d'un tel levier dans le document FR-A-2 200 816.

Cependant, ces leviers présentent un certain nombre d'inconvénients dans la mesure où ils sont relativement peu accessibles aux utilisateurs. En effet, en position desserrée, ce levier est relativement éloigné de l'utilisateur, ce qui oblige celui-ci à se pencher pour saisir la poignée afin de manoeuvrer le levier.

Le but de l'invention est donc de résoudre ces problèmes en proposant un levier de ce type qui soit facilement accessible aux utilisateurs et qui ne gêne pas la manoeuvre des sièges et plus particulièrement du siège du conducteur, lorsque celui-ci est monté rotatif autour d'un axe vertical.

A cet effet, l'invention a pour objet un levier de frein à main, notamment pour véhicule automobile, du type comportant un organe tubulaire relié à l'une de ses extrémités au mécanisme de manoeuvre des freins et muni à l'autre extrémité d'une poignée de manoeuvre et d'un organe de commande du déverrouillage des freins, caractérisé en ce que ladite poignée comporte une portion de préhension reliée à une extrémité d'au moins une branche radiale dont l'autre extrémité est reliée à un manchon disposé autour de l'organe tubulaire, et en ce qu'elle est montée déplaçable à rotation autour de l'organe tubulaire entre une position active dans un plan à peu près vertical et une position escamotée après rotation d'au moins 90°.

Selon un mode de réalisation, ladite poignée comporte deux branches radiales dont les extrémités sont reliées les unes aux extrémités de la portion de préhension et les autres, aux extrémités du manchon.

Selon un mode de réalisation, cette poignée comporte des moyens escamotables de blocage dans ses positions active et escamotée.

L'invention sera mieux comprise à l'aide de la description qui va suivre, donnée uniquement à titre d'exemple et faite en se référant aux dessins annexés, sur lesquels :
- la Fig.1 représente une vue de côté d'un levier selon l'invention;
- la Fig.2 représente une vue en coupe prise suivant la ligne II-II de la Fig.1; et
- les Figs.3 et 4 illustrent le fonctionnement d'un levier selon l'invention.

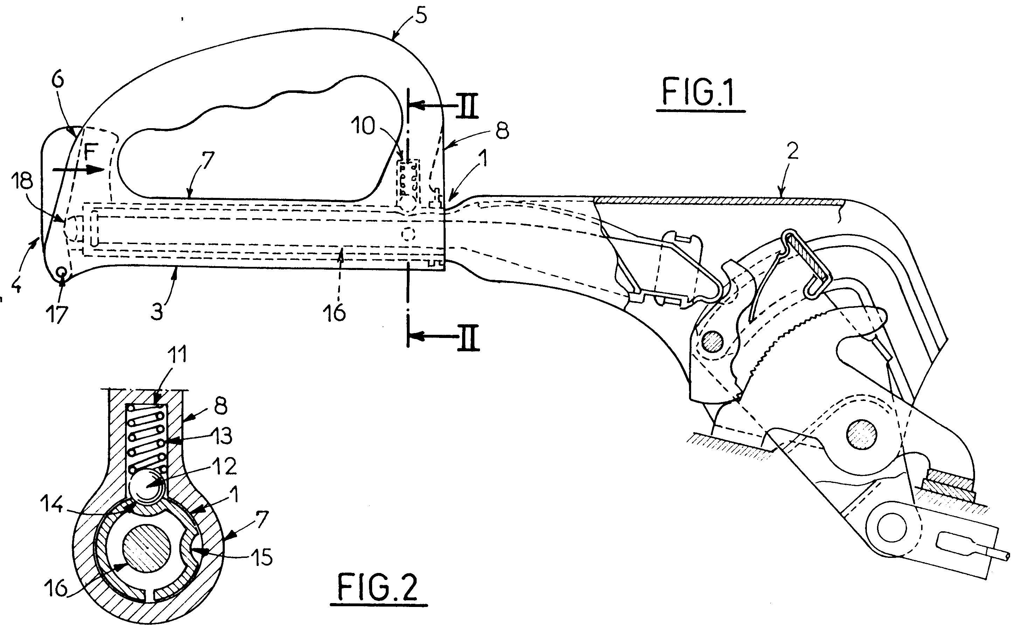

Comme on peut le voir sur la Fig.1, un levier de frein à main selon l'invention, notamment pour véhicule automobile, comporte de manière connue en soi, un organe tubulaire 1 relié à l'une de ses extrémités au mécanisme 2 de manoeuvre des freins et muni à son autre extrémité d'une poignée 3 de manoeuvre et d'un organe 4 de commande du déverrouillage des freins.

Selon l'invention, cette poignée comporte une portion de préhension 5 qui est reliée à une extrémité d'au moins une branche radiale 6 dont l'autre extrémité est reliée à un manchon 7 disposé autour de l'organe tubulaire.

Dans le mode de réalisation représenté, la poignée 3 se présente sous la forme d'une anse comportant deux branches radiales, dont la branche radiale 6 déja mentionnée et reliée à une première extrémité de la portion de préhension 5 et une autre branche radiale 8 reliée à l'autre extrémité de la portion de préhension 5 et à l'autre extrémité du manchon 7.

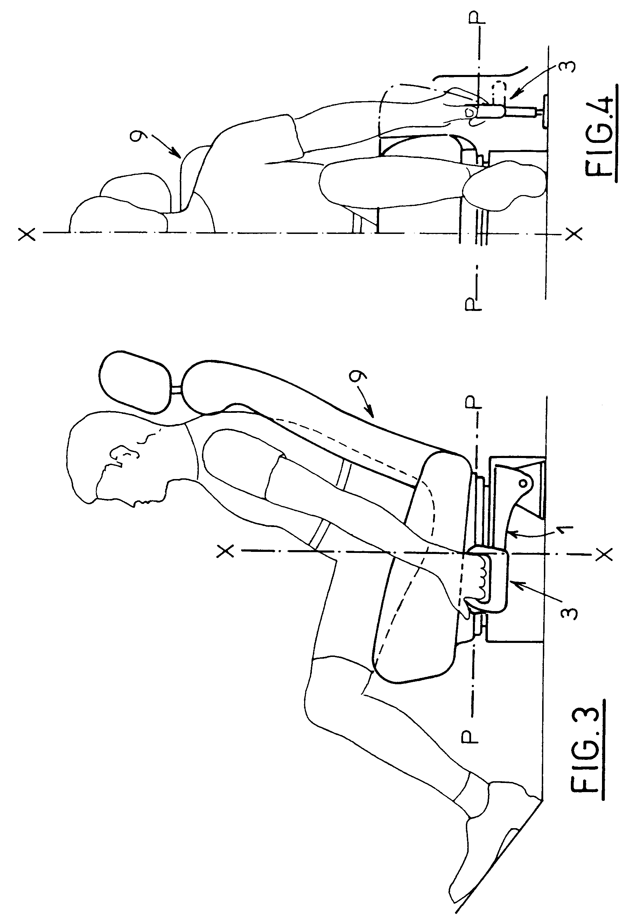

Cette disposition de la portion de préhension 5, décalée par rapport à l'organe tubulaire dans un plan vertical en position active de la poignée, permet d'améliorer l'accessibilité de ce levier aux utilisateurs, comme on peut le voir sur les Fig.3 et 4. Cependant, cette disposition présente un inconvénient qui réside au niveau de la gêne qu'elle peut occasionner lors de la rotation du siège 9 du conducteur autour d'un axe vertical XX.

En effet, la poignée peut alors se trouver dans le plan PP de rotation du siège et limiter ou empêcher celle-ci.

Pour éviter ceci, la poignée du levier selon l'invention est montée déplaçable à rotation autour de l'organe tubulaire entre une position active dans un plan à peu près vertical, représenté sur les figures et une position escamotée après rotation d'au moins 90° comme on peut le voir sur le Fig.4, en traits pointillés.

Dans cette position, la poignée est dégagée du plan de rotation du siège. Il est à noter que ce déplacement angulaire de la poignée entre ses positions active et escamotée peut être obtenu par actionnement par l'utilisateur ou par le siège lui-même lors de sa rotation.

La poignée peut comporter des moyens escamotables de blocage dans ses positions active et escamotée. Ces moyens, désignés sur la Fig.1 par la référence générale 10, sont prévus dans l'une des branches radiales de la poignée lorsque celle-ci en comporte deux. Il va de soi que si la poignée ne comporte qu'une branche radiale, ces moyens peuvent être prévus dans cette branche.

Ces moyens escamotables de blocage sont représentés plus en détail sur la Fig.2.

Sur cette Fig., on constate que le manchon 7 disposé autour de l'organe tubulaire 1 et la branche radiale 8 comportent un logement 11 débouchant en regard de l'organe tubulaire 1 et dans lequel est disposée une bille 12 sollicitée par un organe élastique 13, constitué par exemple par un ressort hélicoïdal, en direction de cet organe tubulaire. Des évidements 14 et 15 sont prévus dans l'organe tubulaire, respectivement au niveau des positions active et escamotée à 90° de la poignée pour coopérer avec cette bille afin de maintenir la poignée en position.

Une tige 16 de commande du déverrouillage des freins est également disposée dans l'organe tubulaire 1.

Cette tige 16 est actionnée par l'organe de commande de déverrouillage 4 (Fig.1) mentionné précédemment. Cet organe comprend un bouton de commande disposé à l'extrémité de l'organe tubulaire et articulé sur la poignée autour d'un axe 17 perpendiculaire à l'axe de l'organe tubulaire. L'organe de commande 4 comporte une surface d'actionnement 18 de cette tige de commande de déverrouillage 16 et il est monté déplaçable dans le sens de la flèche F sur cette figure par l'utilisateur, pour commander le déverrouillage des freins.

On conçoit donc que le levier qui vient d'être décrit est tout à fait adapté à une utilisation dans un véhicule comportant des sièges rotatifs et présente une très bonne accessibilité, dans la mesure où la portion de préhension est décalée vers le haut par rapport à l'organe tubulaire.

Bien entendu, d'autres modes de réalisation peuvent être envisagés.

Ainsi la poignée peut présenter une forme différente de celle représentée et les moyens escamotables de blocage peuvent être constitués par des moyens autres que la bille et le ressort représentés.

## Revendications

1. Levier de frein à main notamment pour véhicule automobile, du type comportant un organe tubulaire (1) relié à l'une de ses extrémités au mécanisme (2) de manoeuvre des freins et muni à l'autre extrémité d'une poignée (3) de manoeuvre et d'un organe (4) de commande du déverrouillage des freins, caractérisé en ce que ladite poignée comporte une portion de préhension (5) reliée à une extrémité d'au moins une branche radiale (6,8) dont l'autre extrémité est reliée à un manchon (7) disposé autour de l'organe tubulaire (1) et en ce qu'elle est montée déplaçable à rotation autour de l'organe tubulaire (1) entre une position active dans un plan à peu près vertical et une position escamotée après rotation d'au moins 90°.

2. Levier de frein selon la revendication 1, caractérisé en ce que ladite poignée (3) comporte deux branches radiales (6,8) dont les extrémités sont reliées les unes aux extrémités de la portion de préhension (5) et les autres aux extrémités du manchon (6).

3. Levier de frein selon la revendication 1 ou 2, caractérisé en ce qu'elle comporte des moyens (10) escamotables de blocage dans ses positions active et escamotée.

4. Levier de frein selon la revendication 3, caractérisé en ce que lesdits moyens escamotables de blocage comprennent une bille (12) sollicitée par un organe élastique (13) en direction de l'organe tubulaire, disposés dans un logement (11) ménagé dans la ou l'une des branches radiales (6,8) de la poignée et dans le manchon (7) et débouchant en regard de l'organe tubulaire (1), des évidements (14,15) étant prévus dans cet organe tubulaire, pour coopérer avec la bille (12) afin de maintenir la poignée en position.

5. Levier selon l'une quelconque des revendications précédentes, caractérisé en ce que l'organe de commande de déverrouillage (4) comprend un bouton de commande disposé à l'extrémité de l'organe tubulaire (1), articulé sur la poignée autour d'un axe (17) perpendiculaire à l'axe de l'organe tubulaire (1) et comportant une surface d'actionnement (18) d'une tige de commande de déverrouillage (16) disposée dans l'organe tubulaire.

## Claims

1. Hand brake lever, in particular for a motor vehicle, of a kind comprising a tubular element (1) linked at one of its ends to a mechanism (2) for controlling the brakes and provided at the other end with an operating handle (3) and an operating element (4) for releasing the brakes, characterized in that said handle comprises a grippable portion (5) connected to at least one radial arm (6,8) at one end, the other end of the arm being connected to a sleeve (7) disposed around the tubular element (1) and in that it is rotationally displaceable around the tubular element (1) between an active position in an approximately vertical plane and a retracted position after rotation through at least 90°.

2. Brake lever according to claim 1 or 2, characterized in that said handle (3) comprises two radial arms (6,8) the ends of which are connected to the grippable portion (5) and the other ends to the ends of the sleeve (6).

3. Brake lever according to claim 1, characterized in that it comprises retractable means (10) for locking in its active and retracted positions.

4. Brake lever according to claim 3, characterized in that said retractable means for locking comprise a ball (12) urged by a resilient element (13) in the direction of the tubular element, disposed in a housing (11) provided in the or one of the radial arms (6, 8) of the handle and in the sleeve (7) and opening opposite the tubular element (1), recesses (14, 15) being provided in this tubular element to co-operate with the ball (12) in order to maintain the handle in position.

5. Lever according to any one of the previous claims, characterized in that the operating element (4) for releasing the brakes comprises a control button disposed at the end of the tubular element (1), pivoted on the handle around an axis (17) which is perpendicular to the axis of the tubular element (1) and containing an actuating surface (18) of an unlocking control rod (16) disposed in the tubular element.

## Patentansprüche

1. Handbremshebel, insbesondere für Kraftfahrzeuge, von der Art, welche ein rohrförmiges Element (1) aufweist, das mit einem seiner Enden mit dem Betätigungsmechanismus (2) der Bremsen verbunden und an seinem anderen Ende mit einem Betätigungsgriff (3) und mit einem Betätigungsorgan (4) für die Entriegelung der Bremsen angeschlossen ist,
**dadurch gekennzeichnet**, **daß**
dieser Betätigungsgriff einen Griffteil (5) enthält, welcher mit einem Ende von wenigstens einem radialen Schenkel (6, 8) verbunden ist, dessen anderes Ende mit einer Manschette (7) verbunden ist, welche um das rohrförmige Element (1) angeordnet ist, und dadurch, daß er drehend verschiebbar um das rohrförmige Element (1) zwischen einer in einer etwa vertikalen Ebene liegenden aktiven Stellung und einer versenkten Stellung nach einer Rotation von mindestens 90° angeordnet ist.

2. Handbremshebel nach Anspruch 1,
**dadurch gekennzeichnet, daß**
der Betätigungsgriff (3) zwei radiale Schenkel (6, 8) aufweist, deren Enden einerseits mit den Enden des Griffteils (5) und andererseits mit den Enden der Manschette (6) verbunden sind.

3. Handbremshebel nach einem der Ansprüche 1 oder 2,
**dadurch gekennzeichnet, daß**
er versenkbare Mittel (10) für die Blockierung in den aktiven und versenkten Stellungen aufweist.

4. Handbremshebel nach Anspruch 3,
**dadurch gekennzeichnet, daß**
die einziehbaren Mittel für die Blockierung eine Kugel (12) aufweisen, welche durch ein elastisches Organ (13) in Richtung des rohrförmigen Elementes beaufschlagt wird und die in einer Aufnahme (11) sitzt, welche in dem oder in einem der Schenkel (5, 8) des Betätigungsgriffes und der Manschette (7) vorgesehen ist und die gegenüber dem rohrförmigen Element (1) mündet, wobei in diesem rohrförmigen Element Vertiefungen (14, 15) vorgesehen sind, welche mit der Kugel (12) zusammenwirken, um den Betätigungsgriff in Stellung zu halten.

5. Handbremshebel nach einem der vorausgegangenen Ansprüche,
**dadurch gekennzeichnet, daß**
das Steuerorgan (4) für die Entriegelung einen Betätigungsknopf aufweist, welcher am Ende des rohrförmigen Elementes (1) angeordnet und an dem Betätigungsgriff um eine Achse (17) angelenkt ist, welche rechtwinklig zu der Achse des rohrförmigen Elementes (1) verläuft, und daß eine Betätigungsfläche (18) an einem Betätigungsgestänge (16) für die Entriegelung vorgesehen ist, das in dem rohrförmigen Element angeordnet ist.
